# EUROPEAN PATENT SPECIFICATION

(11) **EP 4 007 050 B1**
(45) Date of publication and mention of the grant of the patent: **10.07.2024**
(21) Application number: 21759915.8
(22) Date of filing: 25.02.2021
(51) Int. Cl.: H01M 50/20, H01M 50/24, A62C 3/16, A62C 2/06, H01M 10/627, H01M 10/613, H01M 50/116

(54) **BATTERY PACK, BATTERY RACK COMPRISING SAME, AND POWER STORAGE SYSTEM**
BATTERIEPACK, BATTERIERACK DAMIT UND ENERGIESPEICHERVORRICHTUNG
BLOC-BATTERIE, BÂTI POUR BATTERIE LE COMPRENANT, ET APPAREIL DE STOCKAGE D'ÉNERGIE

(30) Priority: 27.02.2020 KR 20200024458
(43) Date of publication of application: 01.06.2022
(73) Proprietor: LG ENERGY SOLUTION, LTD., Seoul 07335 (KR)
(72) Inventor: NAMGOUNG, Hyeok, Daejeon 34122 (KR); HONG, Sung-Goen, Daejeon 34122 (KR); BAE, Kyung-Hyun, Daejeon 34122 (KR); SHIN, Jin-Kyu, Daejeon 34122 (KR); OK, Seung-Min, Daejeon 34122 (KR); LEE, Jin-Kyu, Daejeon 34122 (KR)
(74) Representative: Plasseraud IP
(86) International application number: PCT/KR2021/002407
(87) International publication number: WO 2021/172911

(56) References cited:
- EP-A1- 3 340 337
- EP-A1- 3 509 134
- EP-A1- 3 525 256
- WO-A1-2017/090866
- KR-A- 20080 010 156
- KR-A- 20160 046 597
- KR-A- 20170 061 582
- KR-A- 20180 094 709
- KR-B1- 102 021 072
- US-A1- 2010 136 385
- US-A1- 2010 136 396
- US-A1- 2014 224 465

## Description

### TECHNICAL FIELD

The present disclosure relates to a battery pack, a battery rack comprising the same and an energy storage system, and more particularly, to a battery pack with reduced risk of fire propagation or explosion.

### BACKGROUND ART

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging may be done whenever it is convenient, the self-discharge rate is very low and the energy density is high.

A lithium secondary battery primarily uses lithium-based oxide and a carbon material as a positive electrode active material and a negative electrode active material respectively. The lithium secondary battery includes an electrode assembly including a positive electrode plate and a negative electrode plate coated with the positive electrode active material and the negative electrode active material respectively with a separator interposed between the positive electrode plate and the negative electrode plate, and a packaging or a battery pouch case in which the electrode assembly is hermetically received together with an electrolyte solution.

Recently, secondary batteries are widely used in not only small devices such as portable electronic devices, but also medium- and large-scale devices such as vehicles and energy storage systems. For use in medium- and large-scale device applications, many secondary batteries are electrically connected to increase the capacity and output. In particular, pouch-type secondary batteries are widely used in medium- and large-scale devices due to their easy-to-stack advantage.

More recently, with the use as a source of energy and the growing need for large-capacity structures, there is an increasing demand for a battery pack including a plurality of secondary batteries electrically connected in series and/or in parallel, a battery module in which the secondary batteries are received and a battery management system (BMS).

In general, the battery pack includes an external metal housing to protect the plurality of secondary batteries from external impacts or receive and store the plurality of secondary batteries. In recent years, there is an increasing demand for high capacity battery packs.

However, when thermal runaway occurs in any of the secondary batteries in each battery module included in the battery pack or the battery rack, causing a fire or explosion, heat or flames may spread to adjacent secondary batteries, resulting in a larger fire or explosion, and efforts have been made to prevent fire propagation or explosions.

Accordingly, when thermal runaway or a fire occurs in a secondary battery in the battery pack or the battery rack, it is necessary to rapidly cool the secondary battery to immediately take the countermeasures. Additionally, there is a need for an approach to suppress a fire when the fire occurs in the battery pack or the battery rack.

Further background art is described in US 2014/224465 A1 and US 2010/136385 A1.

### DISCLOSURE

### Technical Problem

The present disclosure is designed to solve the above-described problem, and therefore the present disclosure is directed to providing a battery pack with reduced risk of fire propagation or explosion.

These and other objects and advantages of the present disclosure may be understood by the following description, and will be apparent from the embodiments of the present disclosure. In addition, it will be readily appreciated that the objects and advantages of the present disclosure are realized by means set forth in the appended claims.

### Technical Solution

To achieve the above-described object, a battery pack according to the present invention, which is given in the claims, includes at least one cell assembly including a plurality of secondary batteries stacked in a direction, a module housing having an internal space in which the at least one cell assembly is received, and a spacer member interposed between the plurality of secondary batteries, and configured to press the plurality of secondary batteries in two opposite directions to space the plurality of secondary batteries apart when a temperature of at least one of the plurality of secondary batteries is equal to or higher than a predetermined temperature.

The secondary battery may include a pouch case, the pouch case may include a receiving portion having an internal space in which an electrode assembly is received and a sealing portion formed along an outer periphery of the pouch case, and the spacer member may be disposed in contact with the receiving portion of each of the plurality of secondary batteries.

The spacer member is configured to expand volume when a temperature of a body equals or rises above the predetermined temperature.

The battery pack includes a guide member configured to surround sides of the spacer member to guide the spacer member to expand in a stack direction.

The battery pack may further include a support member provided between the plurality of secondary batteries and configured to be able to irreversibly increase a length in two opposite directions of the spacer member.

The battery pack may be configured such that a fire extinguishing liquid is supplied into the module housing when an internal temperature of the module housing equals or rises above the predetermined temperature.

The spacer member may include a synthetic fiber configured to absorb the fire extinguishing liquid and expand volume when the synthetic fiber contacts the fire extinguishing liquid supplied into the battery pack.

The synthetic fiber may be configured to contact an inner surface of an outer wall of the module housing by volume expansion when the synthetic fiber absorbs the fire extinguishing liquid.

Additionally, to achieve the above-described object, a battery rack according to the present disclosure, as given in the claims, includes the battery pack, and a rack case in which the battery pack is received.

Further, to achieve the above-described object, an energy storage system as given in the claims includes at least two battery racks.

### Advantageous Effects

According to an aspect of the present disclosure, the battery pack of the present disclosure includes the spacer member interposed between the plurality of secondary batteries and configured to press the plurality of secondary batteries in two directions to space the plurality of secondary batteries apart when the temperature of at least one of the plurality of secondary batteries is equal to or higher than the predetermined temperature, so when thermal runaway occurs in at least some of the plurality of secondary batteries, the spacer member may space the plurality of secondary batteries apart to increase the amount of the fire extinguishing liquid fed in between the plurality of secondary batteries. Accordingly, it is possible to rapidly cool the plurality of secondary batteries in which thermal runaway occurred and suppress thermal propagation between the plurality of secondary batteries by the fire extinguishing agent, thereby preventing thermal runaway from spreading between the plurality of secondary batteries. Further, when a fire occurs in the cell assembly, the present disclosure may achieve rapid fire suppression by increasing the feed amount of the fire extinguishing liquid by the spacer member. Ultimately, it is possible to increase safety when thermal runaway or a fire occurs in the cell assembly.

Additionally, according to an aspect of the present disclosure, the present disclosure includes the spacer member configured to expand the volume when the temperature of the body equals or rises above the predetermined temperature, so when a fire or thermal runaway occurs in the cell assembly, the spacer member may immediately expand the volume by the influence of high temperature gas or the temperature of the pouch case to increase the distance between the plurality of secondary batteries. Accordingly, it is possible to rapidly cool the plurality of secondary batteries in which thermal runaway occurred and suppress thermal propagation between the plurality of secondary batteries by the fire extinguishing agent, thereby preventing thermal runaway from spreading between the plurality of secondary batteries. Further, when a fire occurs in the cell assembly, the present disclosure may achieve rapid fire suppression by increasing the feed amount of the fire extinguishing liquid by the spacer member. Ultimately, it is possible to increase safety when thermal runaway or a fire occurs in the cell assembly.

Further, according to an aspect of the present disclosure, the present disclosure further includes the support member configured to be able to irreversibly increase the length in two opposite directions of the spacer member, thereby preventing the distance between the plurality of secondary batteries from reducing again when the spacer member is cooled by contact with the fire extinguishing liquid and the volume of the body reduces. Accordingly, the present disclosure may feed the fire extinguishing liquid in between the plurality of secondary batteries spaced apart by the spacer member.

### BRIEF DESCRIPTION OF THE DRAWINGS

The accompanying drawings illustrate the preferred embodiments of the present disclosure, and together with the following detailed description, serve to provide a further understanding of the technical aspect of the present disclosure. However, the present disclosure should not be construed as being limited to the drawings.
FIG. 1 is a schematic front perspective view of a battery pack according to an embodiment of the present disclosure.
FIG. 2 is a schematic perspective view of the internal components of a battery pack according to an embodiment of the present disclosure.
FIG. 3 is a schematic perspective view of some components of a battery pack according to an embodiment of the present disclosure.
FIGS. 4 and 5 are schematic side views of the operation of a spacer member of a battery pack according to an embodiment of the present disclosure.
FIG. 6 is a schematic perspective view of some components of a battery pack according to another embodiment of the present disclosure.
FIGS. 7 and 8 are schematic perspective views of the operation of a support member of a battery pack according to still another embodiment of the present disclosure.
FIG. 9 is a schematic rear perspective view of a battery pack according to an embodiment of the present disclosure.
FIG. 10 is a schematic front perspective view of a battery rack according to an embodiment of the present disclosure.
FIG. 11 is a schematic rear perspective view of a battery rack according to an embodiment of the present disclosure.
FIG. 12 is a schematic perspective view of a spacer member of a battery pack according to another embodiment of the present disclosure.
FIG. 13 is a schematic diagram of the internal components of a battery pack according to another embodiment of the present disclosure.
FIG. 14 is a schematic front view of an energy storage system according to an embodiment of the present disclosure.

### DETAILED DESCRIPTION

Hereinafter, the preferred embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and illustrations shown in the drawings are just a most preferred embodiment of the present disclosure, but not intended to fully describe the technical aspects of the present disclosure, so it should be understood that a variety of modifications may be made provided they are within the scope of the invention as given by the claims.

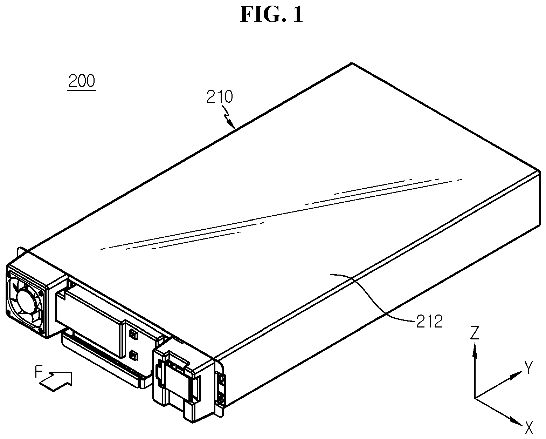

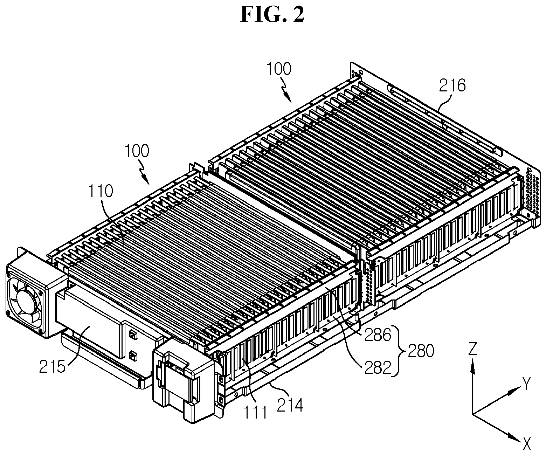

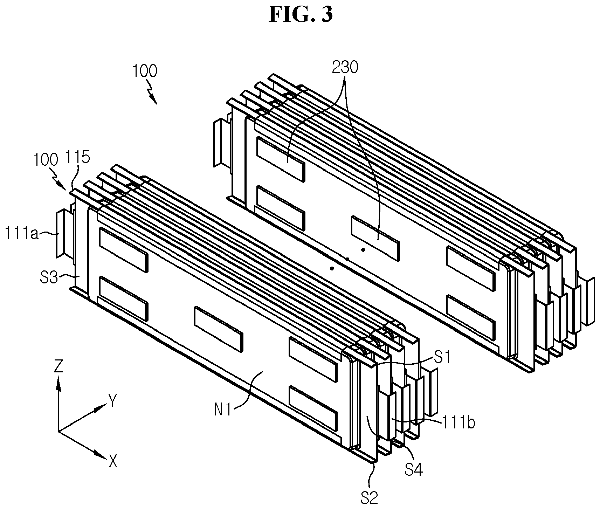

FIG. 1 is a schematic front perspective view of a battery pack according to an embodiment of the present disclosure. FIG. 2 is a schematic perspective view of the internal components of the battery pack according to an embodiment of the present disclosure. Additionally, FIG. 3 is a schematic perspective view of some components of the battery pack according to an embodiment of the present disclosure. For reference, secondary batteries 100 disposed in the middle of the cell assembly 100 are omitted in FIG. 3 for convenience of illustration.

Referring to FIGS. 1 to 3, the battery pack 200 according to an embodiment of the present disclosure includes at least one cell assembly 100, a module housing 210 and a spacer member 230.

Here, the cell assembly 100 may include a plurality of secondary batteries 110 stacked in a direction.

Here, the secondary battery 110 may be a pouch-type secondary battery 110 including a pouch case 115. For example, as shown in FIG. 2, each of two cell assemblies 100 may include 21 pouch-type secondary batteries 110 stacked side by side in the front-rear direction (Y-axis direction).

In particular, the pouch-type secondary battery 110 may include an electrode assembly (not shown), an electrolyte solution (not shown) and a pouch case 115.

Each secondary battery 110 may be placed upright in a direction (Z-axis direction) approximately perpendicular to the ground with two wide surfaces disposed in the front-rear direction and sealing portions S1, S2, S3, S4 disposed along the outer periphery in the up, down, left and right directions, when viewed from the direction F (shown in FIG. 1). In other words, each secondary battery 110 may stand upright in the vertical direction. Unless otherwise specified herein, the up, down, front, rear, left, and right directions are defined when viewed from the direction F.

Here, the pouch case 115 may be a pouch having a concave receiving portion N1 inside. The electrode assembly and the electrolyte solution may be received in the receiving portion N1. Each pouch may include an outer insulating layer, a metal layer and an inner adhesive layer, and the inner adhesive layers adhere to each other at the edges of the pouch case 115 to form the sealing portions formed along the outer periphery of the pouch case 115. A terrace portion may be formed at each of the left and right ends (X-axis direction) at which a positive electrode lead 111a and a negative electrode lead 111b of the secondary battery 110 are formed.

The electrode assembly may be an assembly of an electrode plate coated with an electrode active material and a separator, and may include at least one positive electrode plate and at least one negative electrode plate with the separator interposed between. The positive electrode plate of the electrode assembly may have a positive electrode tab, and at least one positive electrode tab may be connected to the positive electrode lead 111a.

Here, the positive electrode lead 111a may have one end connected to the positive electrode tab and the other end exposed through the pouch, and the exposed portion may act as an electrode terminal of the secondary battery 110, for example, a positive electrode terminal of the secondary battery 110.

The negative electrode plate of the electrode assembly may have a negative electrode tab, and at least one negative electrode tab may be connected to the negative electrode lead 111b. The negative electrode lead 111b may have one end connected to the negative electrode tab and the other end exposed through the pouch, and the exposed portion may act as an electrode terminal of the secondary battery 110, for example, a negative electrode terminal of the secondary battery 110.

Furthermore, the secondary battery 110 of the present disclosure may include at least two electrode leads 111 having opposite polarities. As shown in FIG. 2, when viewed from the direction F of FIG. 1, the electrode lead 111 may include a positive electrode lead 111a and a negative electrode lead 111b. The positive electrode lead 111a and the negative electrode lead 111b may be formed at the left and right ends in opposite directions (X-axis direction) with respect to the center of the secondary battery 110. That is, the positive electrode lead 111a may be provided at one end with respect to the center of the secondary battery 110. The negative electrode lead 111b may be provided at the other end with respect to the center of the secondary battery 110. For example, as shown in FIG. 3, each secondary battery 110 of the cell assembly 100 may have the positive electrode lead 111a and the negative electrode lead 111b extending in the left-right direction.

Here, the terms representing the directions such as front, rear, left, right, up, and down may change depending on the position of the observer or the placement of the stated element. However, in the specification, for convenience of description, the front, rear, left, right, up, and down directions are defined when viewed from the direction F of FIG. 1.

However, the battery pack 200 according to the present disclosure is not limited to the pouch-type secondary battery 110 described above and may use various types of secondary batteries 110 known at the time of filing the application.

The at least two cell assemblies 100 may be arranged in the front-rear direction. For example, as shown in FIG. 2, the two cell assemblies 100 may be arranged in the front-rear direction and spaced a predetermined distance apart from each other.

The battery pack 200 may further include a busbar assembly 280. Specifically, the busbar assembly 280 may include at least one busbar 282 configured to electrically connect the plurality of secondary batteries 110 and at least two busbuar frames 286 configured to mount the at least one busbar 282 on the outer side. The at least two busbuar frames 286 may be provided on each of the left and right sides of the cell assembly 100.

Specifically, the busbar 282 may have a conductive metal. The conductive metal may include, for example, copper, aluminum and nickel.

The busbar frame 286 may have an electrically insulating material. For example, the busbar frame 286 may have a plastic material. More specifically, the plastic material may be polyvinyl chloride.

The module housing 210 may have an internal space to receive the cell assembly 100 therein. Specifically, the module housing 210 may include a top cover 212, a base plate 214, a front cover 215 and a rear cove 216. Each of the top cover 212, the base plate 214, the front cover 215, and the rear cove 216 may be coupled by bolts.

According to this configuration of the present disclosure, the module housing 210 is structured to stably protect the plurality of secondary batteries 110 from external impacts, thereby increasing the safety of the battery pack 200 from external impacts.

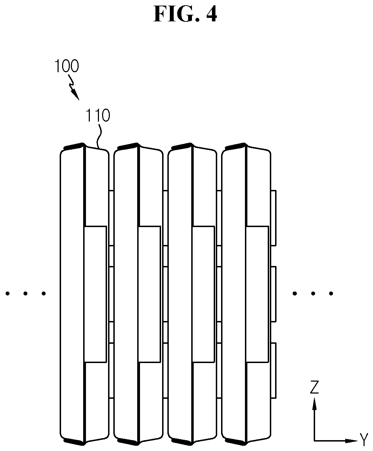

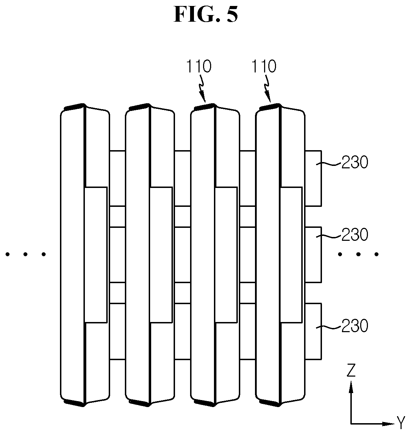

FIGS. 4 and 5 are schematic side views of the operation of the spacer member of the battery pack according to an embodiment of the present disclosure.

Referring to FIGS. 4 and 5 together with FIG. 3, the spacer member 230 may be interposed between the plurality of secondary batteries 110. When the temperature of at least one of the plurality of secondary batteries 110 is equal to or higher than a predetermined temperature, the spacer member 230 may be configured to space the plurality of secondary batteries 110 apart. For example, the spacer member 230 may be configured to press the plurality of secondary batteries 110 in two opposite directions by volume expansion of the body. In other words, the spacer member 230 may generate a force which pushes in two opposite directions to space the plurality of secondary batteries 110 apart by volume expansion. For example, when at least one of the plurality of secondary batteries 110 rises above 200°C, the spacer member 230 may be configured to press the plurality of secondary batteries 110 in two opposite directions by volume expansion of the body.

For example, as shown in FIG. 3, five spacer members 230 may be spaced a predetermined distance apart and disposed in contact with the receiving portion N1 of the pouch case 115 of each of the plurality of secondary batteries 110. For example, five spacer members 230 may be attached to the receiving portion N1 of the pouch case 115. The spacer member 230 may have a rectangular pad shape.

According to this configuration of the present disclosure, the present disclosure includes the spacer member 230 interposed between the plurality of secondary batteries 110 and configured to press the plurality of secondary batteries 110 in two opposite directions to space the plurality of secondary batteries 110 apart when the temperature of at least one of the plurality of secondary batteries 110 is equal to or higher than the predetermined temperature, so when thermal runaway occurs in at least some of the plurality of secondary batteries 110, the spacer member 230 may space the plurality of secondary batteries 110 apart to increase the amount of the fire extinguishing liquid fed in between the plurality of secondary batteries 110. Accordingly, it is possible to rapidly cool the plurality of secondary batteries in which thermal runaway occurred and suppress thermal propagation between the plurality of secondary batteries by the fire extinguishing agent, thereby preventing thermal runaway from spreading between the plurality of secondary batteries. Further, the present disclosure may achieve rapid fire suppression by increasing the feed amount of the fire extinguishing liquid by the spacer member when a fire occurs in the cell assembly. Ultimately, it is possible to increase safety when thermal runaway or a fire occurs in the cell assembly 100.

Referring back to FIGS. 3 to 5, the spacer member 230 may be configured to expand the volume when the temperature of the body equals or rises above the predetermined temperature. At least part of the spacer member 230 may be made of, for example, Saint-Gobain FS1000. Alternatively, the spacer member 230 may include graphite flakes whose volume expands at the predetermined temperature. At least part of the spacer member 230 may be configured to generate a carbide layer whose volume expands at the predetermined temperature or above. At least part of the spacer member 230 may be subjected to carbonization and volume expansion to form a layer. For example, as shown in FIG. 5, when the body is heated above 200°C, the spacer member 230 may be carbonized at the central part, causing volume expansion, to form a carbide layer.

According to this configuration of the present disclosure, the present disclosure is configured such that the spacer member 230 expands the volume when the temperature of the body equals or rises above the predetermined temperature, so when a fire or thermal runaway occurs in the cell assembly 100, the spacer member 230 may immediately expand the volume by the influence of high temperature gas or the temperature of the pouch case 115 to increase the distance between the plurality of secondary batteries 110. Accordingly, it is possible to rapidly cool the plurality of secondary batteries in which thermal runaway occurred, and suppress thermal propagation between the plurality of secondary batteries by the fire extinguishing agent, thereby preventing thermal runaway from spreading between the plurality of secondary batteries. Further, when a fire occurs in the cell assembly, the present disclosure achieves rapid fire suppression by increasing the feed amount of the fire extinguishing liquid by the spacer member. Ultimately, it is possible to increase the safety when thermal runaway or a fire occurs in the cell assembly 100.

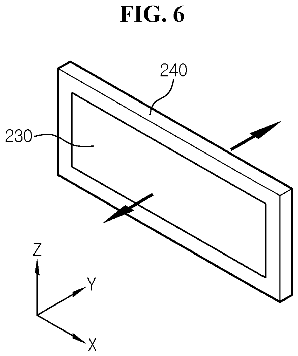

FIG. 6 is a schematic perspective view of some components of the battery pack according to another embodiment of the present disclosure.

Referring to FIG. 6, the battery pack 200 according to another embodiment of the present disclosure may further include a guide member 240. Specifically, the guide member 240 may guide the spacer member 230 to expand in the stack direction. The guide member 240 may be configured to surround the sides of the spacer member 230. That is, when the spacer member 230 has a pad shape, the guide member 240 may be configured to surround the upper, lower, left and right sides of the pad. Here, the sides of the spacer member 230 may be disposed in a direction perpendicular to the stack direction (arrow) of the plurality of secondary batteries 110. The guide member 240 may be in the shape of a frame having a central hollow.

According to this configuration of the present disclosure, the present disclosure further includes the guide member 240 configured to surround the sides of the spacer member 230 to guide the spacer member 230 to expand in the stack direction of the plurality of secondary batteries 110, thereby increasing the distance between the plurality of secondary batteries 110 more effectively.

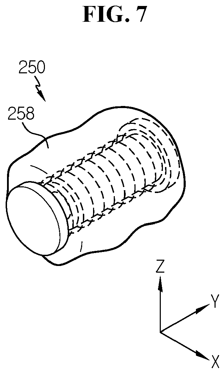

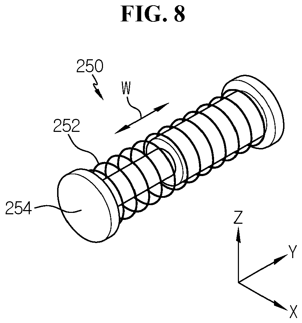

FIGS. 7 and 8 are schematic perspective views of the operation of a support member of the battery pack according to still another embodiment of the present disclosure.

Referring to FIGS. 7 and 8 together with FIGS. 3 and 5, when compared with the battery pack 200 of FIG. 1, the battery pack according to still another embodiment of the present disclosure may further include the support member 250.

Specifically, the support member 250 may be provided between the plurality of secondary batteries 110. The support member 250 may be configured to support the receiving portion N1 of the plurality of secondary batteries 110. The support member 250 may be configured to be able to irreversibly increase the length in two opposite directions of the spacer member 230. That is, when thermal runaway or a fire occurs in the cell assembly 100, the support member 250 may be configured to increase the length in two opposite directions along the stack direction (Y-axis direction) of the plurality of secondary batteries 110. To the contrary, the support member 250 may be configured to increase the length in two opposite directions without reducing the length.

Specifically, the support member 250 may include an elastic portion 252 and a press portion 254 configured to press the secondary battery 110. Here, the elastic portion 252 may be a component configured to elastically deform in length in two opposite directions. More specifically, the press portion 254 may include a cylinder configured to change the length in two opposite directions. The cylinder may have a first cylindrical post having a center axis and a second cylindrical post having a hollow axis.

The elastic portion 252 may include a spring configured to surround the cylinder of the press portion 254. The spring may be configured to press toward the axial center of the cylinder by the two ends having a larger diameter than the other portions of the body of the press portion 254. That is, the spring may be configured to change the length of the spring in the elastic direction with changes in the length of the cylinder. For example, when the length of the cylinder reduces, the spring may elastically shrink when pressed by the two ends of the press portion 254. The spring may be configured to generate an elastic force in a direction W in which the length of the press portion 254 increases.

According to this configuration of the present disclosure, the present disclosure further includes the support member 250 configured to be able to irreversibly increase the length in two opposite directions of the spacer member 230, thereby preventing the distance between the plurality of secondary batteries 110 from reducing again when the spacer member 230 is cooled by contact with the fire extinguishing liquid and the volume of the body reduces. Accordingly, the present disclosure may feed the fire extinguishing liquid in between the plurality of secondary batteries 110 spaced apart by the spacer member 230 stably.

Referring back to FIGS. 7 and 8, a holding portion 258 configured to hold the elastic portion 252 in compressed state may be provided on the outer surface of the support member 250. The holding portion 258 may include, for example, a phase change material which changes the phase from a solid phase to a liquid phase at the predetermined temperature. For example, the holding portion 258 may include paraffin.

That is, during the normal operation of the battery pack 200, the support member 250 is held in compressed state, and when the temperature of the cell assembly 100 exceeds, for example, 100°C, the holding portion 258 changes the phase from a solid phase to a liquid phase to release the support member 250 from the compressed state. Accordingly, the support member 250 may be configured to extend the length in the stack direction of the plurality of secondary batteries 110.

According to this configuration of the present disclosure, the holding portion 258 is provided on the outer surface of the support member 250 to hold the elastic portion in compressed state, so the support member 250 is disallowed to generate a compression force before a fire or thermal runaway occurs in the cell assembly 100 and is allowed to generate a compression force after a fire or thermal runaway occurs in the cell assembly 100, thereby effectively increasing the distance between the plurality of secondary batteries 110.

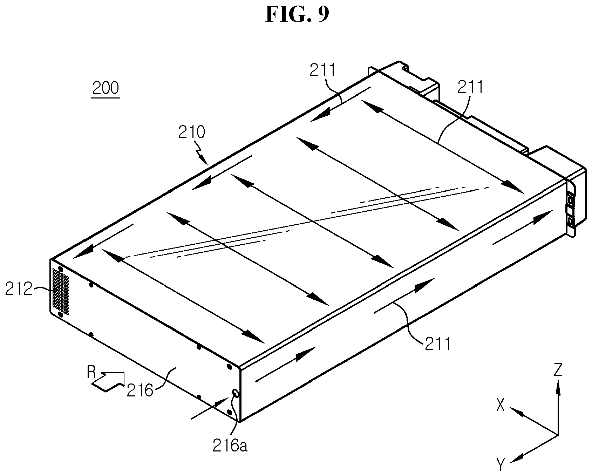

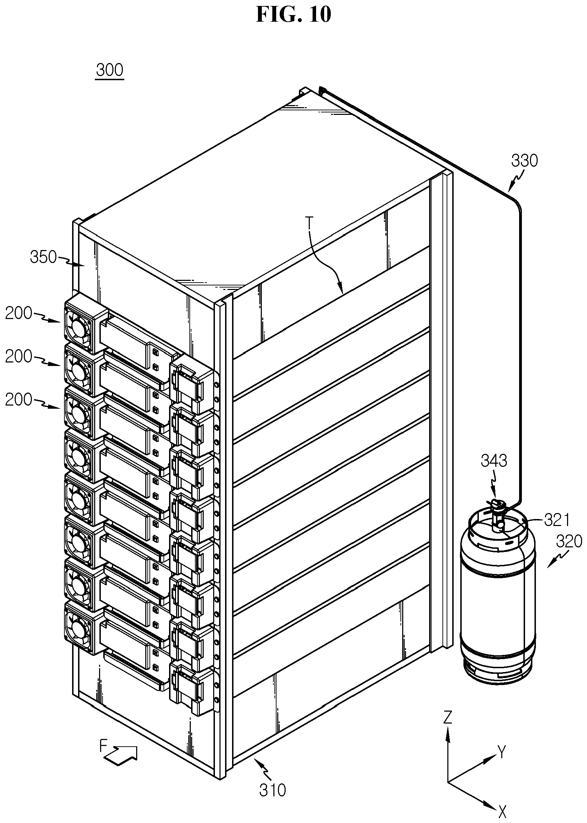

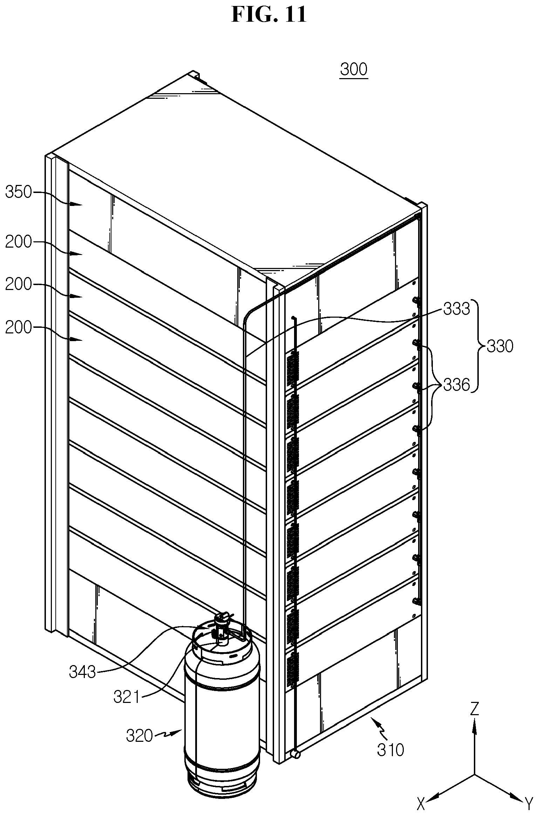

FIG. 9 is a schematic rear perspective view of the battery pack according to an embodiment of the present disclosure. FIG. 10 is a schematic perspective view of a battery rack according to an embodiment of the present disclosure. Additionally, FIG. 11 is a schematic rear perspective view of the battery rack according to an embodiment of the present disclosure.

Referring to FIGS. 10 and 11, the battery pack 200 may be configured such that the fire extinguishing liquid is supplied into the module housing 210 when the internal temperature of the module housing 210 rises above a predetermined temperature. For example, the predetermined temperature may be equal to or higher than 200°C. For example, the battery pack 200 may be configured such that the fire extinguishing liquid is supplied through an inlet 216a provided in the rear cover 216. The fire extinguishing liquid may move along a gas passage 211 in the module housing 210.

The battery pack 200 may include a fire extinguishing liquid tank 320, a pipe 330 and a fire extinguishing valve 343. First, the fire extinguishing liquid tank 320 may store the fire extinguishing liquid (not shown) therein. For example, the fire extinguishing liquid may be an inorganic salt enriched solution such as potassium carbonate, a chemical foam, an air foam, carbon dioxide or water. Additionally, the fire extinguishing liquid tank 320 may include compressed gas to spray the fire extinguishing liquid with proper pressure or move the fire extinguishing liquid along the pipe 330.

For example, the capacity of the fire extinguishing liquid tank 320 may be 59 L, the compressed gas may be 8 bar nitrogen, and the fire extinguishing liquid may be 40 L of water. Here, in case that water is used as the fire extinguishing liquid, water has a cooling and fire extinguishing effect and a heat shielding effect when sprayed into the battery pack 200, so especially when high temperature gas and flames are generated due to thermal runaway, it is effective in preventing thermal propagation. Accordingly, it is possible to effectively prevent the propagation of fires or thermal runaway between the plurality of battery packs 100.

The pipe 330 may be connected to supply the fire extinguishing liquid from the fire extinguishing liquid tank 320 to each of the at least two battery packs 200. For example, the pipe 330 may include a material having resistance to corrosion by water. For example, the pipe 330 may include stainless steel. One end of the pipe 330 may be connected to an outlet 321 of the fire extinguishing liquid tank 320. The other end of the pipe 330 may extend into each of the at least two battery packs 200.

For example, the pipe 330 may include a common pipe 333 connected to the outlet 321 through which the fire extinguishing liquid in the fire extinguishing liquid tank 320 is forced out, and a distribution pipe 336 of distributed structure connected from the common pipe 333 to each of the at least two battery packs 200. For example, as shown in FIG. 11, the pipe 330 may include one common pipe 333 connected to the outlet 321 of the fire extinguishing liquid tank 320, and eight distribution pipes 336 branched off from the common pipe 333. Additionally, the eight distribution pipes 336 may be respectively connected to eight battery packs 200.

When gas (air) in the battery pack 200 equals or rises above the predetermined temperature, the fire extinguishing valve 343 may be configured to supply the fire extinguishing liquid from the fire extinguishing liquid tank 320 into the battery pack 200. For example, the predetermined temperature may be equal to or higher than 200°C. That is, the fire extinguishing valve 343 may be an active valve having an open outlet through which the fire extinguishing liquid is fed into the battery pack 200 above the predetermined temperature.

According to this configuration of the present disclosure, when the internal temperature equals or rises above the predetermined temperature, the battery pack 200 of the present disclosure may be configured to open the fire extinguishing valve 343 to supply the fire extinguishing liquid in the fire extinguishing liquid tank 320 into the module housing 210, so when thermal runaway or a fire occurs in the cell assembly 100 of the battery pack 200, the fire extinguishing valve 343 may immediately supply the fire extinguishing liquid into the battery pack 200 by the influence of the increased temperature by the thermal runaway. Ultimately, it is possible to effectively increase the fire safety of the battery pack 200.

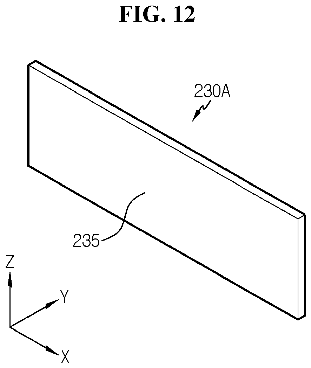

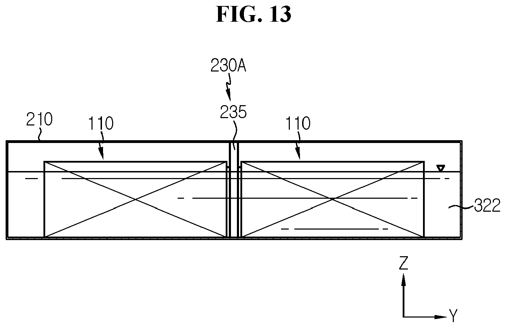

FIG. 12 is a schematic perspective view of the spacer member of the battery pack according to another embodiment of the present disclosure. Additionally, FIG. 13 is a schematic diagram of the internal components of the battery pack according to another embodiment of the present disclosure.

Referring to FIGS. 12 and 13 together with FIG. 1, the spacer member 230A of the battery pack according to another embodiment of the present disclosure may include a synthetic fiber 235 configured to absorb the fire extinguishing liquid 322 and expand the volume when the synthetic fiber 235 contacts the fire extinguishing liquid 322 supplied into the module housing 210 of the battery pack 200. The synthetic fiber 235 may be interposed between the plurality of secondary batteries 110.

The spacer member 230A may include the synthetic fiber 235. The synthetic fiber 235 may have a rectangular pad shape. The front and rear surfaces of the synthetic fiber 235 may have a size corresponding to the size of the front or rear surface of the secondary battery 110. When the synthetic fiber 235 absorbs the fire extinguishing liquid 322, the synthetic fiber 235 may have a size change by volume expansion. Additionally, the synthetic fiber 235 may have elastic properties that it deforms when pressed.

The synthetic fiber 235 may be configured to absorb the fire extinguishing liquid 322. The synthetic fiber 235 may include a super absorbent fiber formed by spinning super absorbent resin into a mesh shape. Here, the super absorbent resin may be configured to absorb the fire extinguishing liquid (water) that is heavier by about 500 to 1,000 times than its weight. For example, the super absorbent resin may be a super absorbent resin product from LG Chem. For example, the synthetic fiber 235 may be made by simultaneously polymerizing acrylic acid and methyl acrylate as raw materials in water, extracting the resulting polymer and spinning into the shape of a mesh.

According to this configuration of the present disclosure, the spacer member 230A includes the synthetic fiber 235 configured to absorb the fire extinguishing liquid 322, so when the fire extinguishing liquid 322 is supplied into the battery pack 200, the spacer member 230A absorbs the fire extinguishing liquid 322 to form a barrier against heat, thereby suppressing the thermal propagation between the plurality of secondary batteries 110. Accordingly, when a fire or thermal runaway occurs in any secondary battery 110 within the cell assembly 100, it is possible to prevent the fire or thermal propagation to adjacent secondary battery 110. Accordingly, it is possible to effectively increase the safety of the battery pack 200.

Additionally, the synthetic fiber 235 of the present disclosure may be configured to contact the inner surface of the outer wall of the module housing 210. Specifically, the synthetic fiber 235 may be configured to contact the inner surface of the outer wall of the module housing 210 by volume expansion. That is, when the fire extinguishing liquid (water) is fed into the battery pack 200 in the event of a fire or thermal runaway in at least some of the secondary batteries 110 of the cell assembly 100, the synthetic fiber 235 of the spacer member 230A may absorb the fire extinguishing liquid 322 and deform by volume expansion as much as the amount of absorbed water. The synthetic fiber 235 may deform such that it comes into contact with the inner surface of the outer wall of the module housing 210 by volume expansion. For example, as shown in FIG. 6, the top of the synthetic fiber 235 of the spacer member 230A may contact the inner surface of the top cover 212 of the module housing 210.

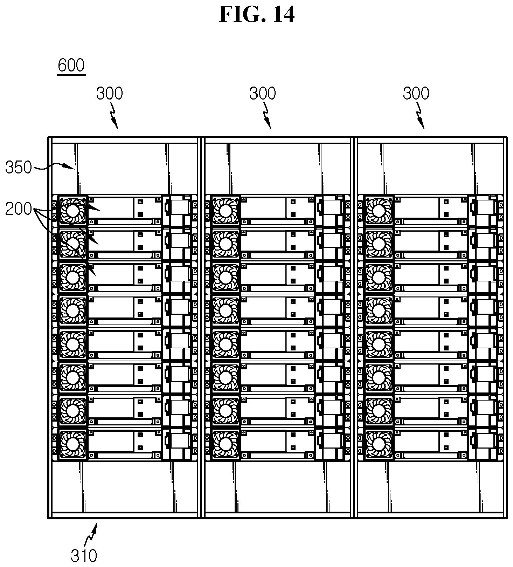

FIG. 14 is a schematic front view of an energy storage system according to an embodiment of the present disclosure.

Referring to FIG. 14 together with FIG. 10, the battery rack 300 according to an embodiment of the present disclosure may include the battery pack 200, and a rack case 310 in which the battery pack 200 is received. The rack case 310 may be configured to receive the plurality of battery packs 200 of the battery pack 200 vertically stacked therein. The lower surface of the battery pack 200 may be placed parallel to the horizontal plane in the rack case 310.

Here, the horizontal direction refers to a direction parallel to the ground when the battery pack 200 is placed on the ground, and may be referred to as at least one direction on a plane perpendicular to the vertical direction.

The rack case 310 may be open to at least one side, and the battery pack 200 may be inserted into the internal space through the open side. In this instance, the open side of the rack case 310 may be closed.

The battery rack 300 may further include other components such as a Battery Management System (BMS) 350 inside or outside of the rack case 310. The BMS 350 may be disposed on top T of the plurality of battery packs 200.

The energy storage system 600 according to an embodiment of the present disclosure may include at least two battery racks 300. The at least two battery racks 300 may be arranged in a direction. For example, as shown in FIG. 14, the energy storage system 600 may include three battery racks 300 arranged in a direction. Additionally, the energy storage system 600 may include a separate central control unit (not shown) to control the charge/discharge of the three battery racks 300.

The terms indicating directions as used herein such as upper, lower, left, right, front and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that various modifications and changes may be made thereto within the technical aspects of the present disclosure and the equivalent scope of the appended claims.

### [Description of Reference Numerals]

| | | | |
|---|---|---|---|
| 200: | Battery pack | 100: | Cell assembly |
| 110: | Secondary battery | 210: | Module housing |
| 115: | Pouch case | | |
| 230: | Spacer member | 240: | Guide member |
| 250: | Support member | 235: | Synthetic fiber |
| 310: | Fire extinguishing valve | 320: | Fire extinguishing liquid tank |
| 321: | Outlet | | |
| 333, 336: | Pipe, Common pipe, Distribution pipe | | |
| 300: | Battery rack | 310: | Rack case |
| 600: | Energy storage system | | |

## Claims

1. A battery pack (200), comprising:
at least one cell assembly (100) including a plurality of secondary batteries (110) stacked in a stack direction;
a module housing (210) having an internal space in which the at least one cell assembly is received; and
a spacer member (230) interposed between the plurality of secondary batteries, and configured to press the plurality of secondary batteries along two opposite directions to space the plurality of secondary batteries apart when a temperature of at least one of the plurality of secondary batteries is equal to or higher than a predetermined temperature;
wherein the spacer member is configured to expand volume when a temperature of the spacer member equals or rises above the predetermined temperature;
**characterized in that** it further comprises a guide member (240) configured to surround sides of the spacer member to guide the spacer member to expand in the stack direction.

2. The battery pack according to claim 1, wherein the secondary battery includes a pouch case (115),
the pouch case includes a receiving portion (N1) having an internal space in which an electrode assembly is received, and a sealing portion (S1, S2, S3, S4) formed along an outer periphery of the pouch case, and the spacer member is disposed in contact with the receiving portion of each of the plurality of secondary batteries.

3. The battery pack according to claim 1, further comprising:
a support member (250) provided between the plurality of secondary batteries and configured to be able to irreversibly increase in length in two opposite directions along the stack direction.

4. The battery pack according to claim 1, wherein the battery pack is configured such that a fire extinguishing liquid is supplied into the module housing when an internal temperature of the module housing equals or rises above the predetermined temperature.

5. The battery pack according to claim 4, wherein the spacer member includes a synthetic fiber (235) configured to absorb the fire extinguishing liquid and expand volume when the synthetic fiber contacts the fire extinguishing liquid supplied into the battery pack.

6. The battery pack according to claim 5, wherein the synthetic fiber is configured to contact an inner surface of an outer wall of the module housing by volume expansion when the synthetic fiber absorbs the fire extinguishing liquid.

7. A battery rack (300) comprising the battery pack according to any one of claims 1 to 6 and a rack case (310) in which the battery pack is received.

8. An energy storage system (600) comprising at least two battery racks according to claim 7.

## Patentansprüche

1. Batteriepack (200), umfassend:
wenigstens eine Zellenanordnung (100), welche eine Mehrzahl von Sekundärbatterien (110) umfasst, die in einer Stapelrichtung gestapelt sind;
ein Modulgehäuse (210), welches einen internen Raum aufweist, in welchem die wenigstens eine Zellenanordnung aufgenommen ist; und
ein Abstandshalterelement (230), welches zwischen der Mehrzahl von Sekundärbatterien eingefügt ist und dazu eingerichtet ist, entlang zweier entgegengesetzter Richtungen auf die Mehrzahl von Sekundärbatterien zu drücken, um die Mehrzahl von Sekundärbatterien voneinander zu beabstanden, wenn eine Temperatur wenigstens einer der Mehrzahl von Sekundärbatterien gleich wie oder höher als eine vorbestimmte Temperatur ist;
wobei das Abstandshalterelement dazu eingerichtet ist, sich in seinem Volumen auszudehnen, wenn eine Temperatur des Abstandshalterelements gleich der vorbestimmten Temperatur ist oder darüber ansteigt;
**dadurch gekennzeichnet, dass** er ferner ein Führungselement (240) umfasst, welches dazu eingerichtet ist, Seiten des Abstandshalterelements zu umgeben, um das Abstandshalterelement derart zu führen, dass es sich in der Stapelrichtung ausdehnt.

2. Batteriepack nach Anspruch 1, wobei die Sekundärbatterie ein Beutelgehäuse (115) umfasst,
wobei das Beutelgehäuse einen Aufnahmeabschnitt (N1), welcher einen internen Raum aufweist, in welchem eine Elektrodenanordnung aufgenommen ist, und einen Dichtabschnitt (S1, S2, S3, S4) umfasst, welcher entlang eines äußeren Umfangs des Beutelgehäuses gebildet ist, und wobei das Abstandshalterelement in Kontakt mit dem Aufnahmeabschnitt jeder der Mehrzahl von Sekundärbatterien angeordnet ist.

3. Batteriepack nach Anspruch 1, ferner umfassend:
ein Halterungselement (250), welches zwischen der Mehrzahl von Sekundärbatterien bereitgestellt ist und dazu eingerichtet ist, dazu in der Lage zu sein, sich in seiner Länge in zwei entgegengesetzten Richtungen entlang der Stapelrichtung irreversibel zu vergrößern.

4. Batteriepack nach Anspruch 1, wobei der Batteriepack derart eingerichtet ist, dass eine Feuerlöschflüssigkeit in das Modulgehäuse zugeführt wird, wenn eine interne Temperatur des Modulgehäuses gleich der vorbestimmten Temperatur ist oder darüber ansteigt.

5. Batteriepack nach Anspruch 4, wobei das Abstandshalterelement eine synthetische Faser (235) umfasst, welche dazu eingerichtet ist, die Feuerlöschflüssigkeit zu absorbieren und sich in ihrem Volumen auszudehnen, wenn die synthetische Faser die in den Batteriepack zugeführte Feuerlöschflüssigkeit kontaktiert.

6. Batteriepack nach Anspruch 5, wobei die synthetische Faser dazu eingerichtet ist, durch eine Volumenausdehnung eine innere Fläche einer äußeren Wand des Modulgehäuses zu kontaktieren, wenn die synthetische Faser die Feuerlöschflüssigkeit absorbiert.

7. Batteriegestell (300), umfassend den Batteriepack nach einem der Ansprüche 1 bis 6 und ein Gestellgehäuse (310), in welchem der Batteriepack aufgenommen ist.

8. Energiespeichersystem (600), umfassend wenigstens zwei Batteriegestelle nach Anspruch 7.

## Revendications

1. Bloc-batterie (200), comprenant :
au moins un ensemble d'éléments (100) incluant une pluralité de batteries secondaires (110) empilées dans une direction d'empilement ;
un boîtier de module (210) présentant un espace interne dans lequel l'au moins un ensemble d'éléments est reçu ; et
un organe intercalaire (230) interposé entre la pluralité de batteries secondaires, et configuré pour presser la pluralité de batteries secondaires le long de deux directions opposées pour espacer la pluralité de batteries secondaires les unes des autres lorsqu'une température d'au moins l'une de la pluralité de batteries secondaires est supérieure ou égale à une température prédéterminée ;
dans lequel l'organe intercalaire est configuré pour s'accroître en volume lorsqu'une température de l'organe intercalaire est égale à la température prédéterminée ou s'élève au-dessus ;
**caractérisé en ce qu'**il comprend en outre un organe de guidage (240) configuré pour entourer les côtés de l'organe intercalaire pour guider l'accroissement de l'organe intercalaire dans la direction d'empilement.

2. Bloc-batterie selon la revendication 1, dans lequel la batterie secondaire inclut un étui (115),
l'étui inclut une partie de réception (N1) présentant un espace interne dans lequel un ensemble électrode est reçu, et une partie d'étanchéité (S1, S2, S3, S4) formée le long d'une périphérie extérieure de l'étui, et l'organe intercalaire est disposé en contact avec la partie de réception de chacune de la pluralité de batteries secondaires.

3. Bloc-batterie selon la revendication 1, comprenant en outre :
un organe de support (250) fourni entre la pluralité de batteries secondaires et configuré pour être apte à croître de manière irréversible en longueur dans deux directions opposées le long de la direction d'empilement.

4. Bloc-batterie selon la revendication 1, dans lequel le bloc-batterie est configuré de sorte qu'un liquide d'extinction d'incendie est fourni dans le boîtier de module lorsqu'une température interne du boîtier de module est égale à la température prédéterminée ou s'élève au-dessus.

5. Bloc-batterie selon la revendication 4, dans lequel l'organe intercalaire inclut une fibre synthétique (235) configurée pour absorber le liquide d'extinction d'incendie et s'accroître en volume lorsque la fibre synthétique entre en contact avec le liquide d'extinction d'incendie fourni dans le bloc-batterie.

6. Bloc-batterie selon la revendication 5, dans lequel la fibre synthétique est configurée pour entrer en contact avec une surface interne d'une paroi externe du boîtier de module par accroissement de volume lorsque la fibre synthétique absorbe le liquide d'extinction d'incendie.

7. Bâti pour batterie (300) comprenant le bloc-batterie selon l'une quelconque des revendications 1 à 6 et une enceinte de bâti (310) dans laquelle est reçu le bloc-batterie.

8. Système de stockage d'énergie (600) comprenant au moins deux bâtis pour batterie selon la revendication 7.
